Europäisches Patentamt

European Patent Office

Office européen des brevets

(11) Veröffentlichungsnummer: **0 244 499**

**A1**

## (12) EUROPÄISCHE PATENTANMELDUNG

(21) Anmeldenummer: **86106250.3**

(51) Int. Cl.⁴: **C01B 31/08**

(22) Anmeldetag: **07.05.86**

(43) Veröffentlichungstag der Anmeldung:
**11.11.87 Patentblatt 87/46**

(84) Benannte Vertragsstaaten:
**AT CH DE FR GB IT LI**

(71) Anmelder: **Ebner & Co. KG Anlagen und Apparate**
**Industriestrasse 8**
**D-6419 Eiterfeld(DE)**

(72) Erfinder: **Ebner, Karl**
**Theodor-Heuss-Str. 3**
**D-6370 Oberursel/Ts.(DE)**
Erfinder: **Ebner, Stefan, Dipl.-Ing.**
**Theodor-Heuss-Str. 3**
**D-6370 Oberursel/Ts.(DE)**

(74) Vertreter: **Jaeger, Klaus, Dipl.-Chem. Dr.**
**JAEGER & PARTNER Patentanwälte**
**Pippinplatz 4a**
**D-8035 Gauting(DE)**

(54) **Verfahren zur Regenerierung von Aktivkohle.**

(57) Es wird ein Verfahren zur Regenerierung von Aktivkohle mit Wasserdampf beschrieben, bei dem der nach Erwärmung der Aktivkohle abgeführte desorbatbeladene Wasserdampf mittels eines Wärmeaustauschers zur Erzeugung von reinem Wasserdampf genutzt wird und der sekundärseitig erzeugte reine Wasserdampf komprimiert und auf die Aktivkohle zurückgeleitet wird. Das Verfahren zeichnet sich dadurch aus, daß der sekundärseitig in dem Wärmeaustauscher erzeugte Wasserdampf unter Einspritzung von Wasser komprimiert wird. Hierdurch wird Zusatzdampf erzeugt, der bei der Regenerierung von Aktivkohle zum Aufheizen des Adsorbers genutzt werden kann.

## Verfahren zur Regenerierung von Aktivkohle

Die Erfindung betrifft ein Verfahren zur Regenerierung von Aktivkohle mit Wasserdampf der im Oberbegriff des Anspruchs 1 genannten Art.

Die Erfindung betrifft insbesondere die verbesserte Nutzung der im Wasserdampf gespeicherten Energie.

Mit Aktivkohle beschickte Adsorptionsanlagen werden in großem Umfang sowohl zur Wiedergewinnung als auch zur Ent sorgung von beispielsweise Schwefelkohlenstoff oder Toluol in Abgasen, Abdämpfen oder in Abluft aus Betriebsanlagen unterschiedlichster Art eingesetzt. In anlagenspezifisch vorgegebenen Intervallen muß dann die Aktivkohle in den Adsorbern regeneriert werden, das heißt, die Aktivkohle muß wieder vom adsorbierten Schadstoff, beispielsweise Schwefelkohlenstoff oder Toluol, befreit werden. Dies erfolgt üblicherweise dadurch, daß die beladene Aktivkohle mit Wasserdampf aufgeheizt und nach Erreichen der gewünschten Endtemperatur mit weiterem Wasserdampf ausgedämpft wird. Der zu diesem Zweck und zu Transportzwecken durch die beladene Aktivkohle gedrückte Wasserdampf entlädt die Aktivkohle und nimmt die von der Aktivkohle abgegebenen Schadstoffe mit.

Der mit den Schadstoffen belastete Wasserdampf wird nach Verlassen des Adsorbers kondensiert, wobei die im Wasserdampfstrom absorbierten Gase und Dämpfe ebenfalls verflüssigt und als organische Kondensatphase aus dem Wasserdampfkondensat abgeschieden werden.

Bei Gasreinigungsanlagen der vorstehend beschriebenen Art handelt es sich zumeist um Apparate, die für große Durchsätze ausgelegt sind, üblicherweise zur Behandlung von Abgasmengen in der Größenordnung von 100.000 m³/h. Zur Regenerierung von Adsorptionsanlagen dieser Größenordnung, die beispielsweise mit $CS_2$ gesättigt sind, sind bei einer Betriebstemperatur von 90 °C etwa 12 t/h Wasserdampf erforderlich. Etwa 1/3 der Gesamtmenge an benötigtem Wasserdampf entfällt auf die Aufheizung der Aktivkohle auf die Betriebstemperatur von 90 °C, während etwa 2/3 der Gesamtmenge des Wasserdampfes zum Ausdämpfen Verwendung finden.

Die Hauptmenge des von der Aktivkohle adsorbierten Stoffes wird bereits bei Erwärmung der Aktivkohle mit heißem Wasser dampf ausgetrieben, so daß bei Erreichen einer Endtemperatur von 90 bis 95 °C nur noch wenig Desorbat in dem den Adsorber verlassenden Wasserdampf enthalten ist.

In Anbetracht der großen Dampfmenge, die für die Ausdämpfphase des Regenerierungsprozesses erforderlich ist, und des großen Energiebetrages, der in dieser Dampfmenge gespeichert ist, empfiehlt es sich, den aus dem Adsorber austretenden heißen Wasserdampf zur Erzeugung von Frischdampf, der zum weiteren Ausdämpfen in den Adsorber eingeleitet wird, zu nutzen. Hierzu wird der desorbatbeladene Wasserdampf einem Wärmeaustauscher zugeführt, worin die Hauptmenge des Wasserdampfes kondensiert und sekundär reiner Wasserdampf für das Ausdämpfen des Adsorbers erzeugt wird. Der in dem Wärmeaustauscher nicht kondensierte Anteil des Wasserdampfes enthält Desorbat, dessen Anteil an nicht kondensiertem Wasserdampf um so größer ist, je niedriger sein Siedepunkt ist. Wenn $CS_2$ das Desorbat ist, sind die den Wärmeaustauscher verlassenden $CS_2$-Anteile im nicht kondensierten Wasserdampf beträchtlich. Das $CS_2$ kann in einer folgenden Kondensationsstufe abgeschieden werden.

Als Wärmeaustauscher kann ein Fallstromverdampfer verwendet werden, dessen sekundärseitig erzeugter reiner Wasserdampf nach Kompression mittels eines mechanischen Verdichters, beispielsweise eines Turbogebläses oder Drehkolbengebläses, dem Adsorber zugeführt wird.

Die von dem Fallstromverdampfer sekundärseitig erzeugte Wasserdampfmenge ist kleiner als die in den Fallstromverdampfer zur Kondensation eingeleitete Wasserdampfmenge, da, wie bereits erwähnt, nicht der gesamte Wasserdampf im Fallstromverdampfer kondensiert werden kann. Diese Verlustdampfmenge muß also ausgeglichen werden.

Ein Nachteil des bisher beschriebenen Verfahrens ist darin zu sehen, daß die Kompressionsarbeit, die bei Kompression des vom Fallstromverdampfer erzeugten reinen Wasserdampfes dem Wasserdampf zugeführt wird, nur unvollkommen bei der Regenerierung der Aktivkohle genutzt wird. Zwar wird der Wasserdampf durch die Kompression von etwa 90 auf ca. 105 °C aufgeheizt, jedoch erhöht diese Temperaturerhöhung die Regenerierungsleistung des Wasserdampfes im Adsorber kaum, so daß die dem Damp zugeführte Energie mehr oder weniger verloren geht.

Andererseits sind bei der Regenerierung von Aktivkohle beträchtliche Energiemengen notwendig, um die erforderliche Betriebstemperatur zu erreichen.

Angesichts dieses Standes der Technik liegt der Erfindung die Aufgabe zugrunde, ein Verfahren und eine Anlage zur Regenerierung von Aktivkohle durch Wasserdampf zu schaffen, bei dem der Energieinhalt des benötigten Wasserdampfes verbessert genutzt werden kann, und zwar insbesondere für das Aufheizen der Aktivkohle.

Diese Aufgabe wird durch ein Verfahren der eingangs genannten Art, das die im kennzeichnenden Teil des Patentanspruchs 1 genannten Merkmale aufweist, gelöst.

Außerdem schafft die Erfindung eine Anlage zur Regenerierung von Aktivkohle der im Anspruch 5 beschriebenen Art.

Der im Wärmeaustauscher sekundärseitig erzeugte reine Wasserdampf wird also komprimiert, wobei gleichzeitig der Dampf mit Wasser in Kontakt gebracht wird. Das Wasser verdampft dabei in die heiße Dampfphase unter Abkühlung des Dampfes. Die zuzuführende Wassermenge bemißt sich nach der in der Dampfphase einzustellenden Temperatur; im Falle der Desorption von $CS_2$ oder Toluol liegt sie etwa im Bereich von 90 °C. Die zuzuführende Wassermenge ist größer als notwendig, um das Defizit an reinem Wasserdampf auszugleichen. Es wird also über die benötigte Dampfmenge hinausgehend Zusatzdampf erzeugt, der einem Mischkondensator zugeführt und dort kondensiert wird. Die von dem Zusatzdampf transportierte Energie kann anschließend zu beliebigen Zwecken genutzt werden. Im Zusammenhang mit der Regenerierung von Aktivkohle kann die letztlich bei Kompression des Sekundärdampfes erzeugte Energie zur Aufheizung eines Adsorbers mit Aktivkohle genutzt werden.

Der Lösung der erfindungsgemäßen Aufgabe liegt also der Gedanke zugrunde, die bei der Kompression des Sekundärdampfes des Wärmeaustauschers dem Sekundärdampf zugeführte Kompressionsarbeit sowohl zum Ausgleich des Defizits an Sekundärdampf als auch zur Gewinnung von Überschußdampf auf einem beträchtlichen Temperaturniveau zu nutzen.

Entsprechend einer bevorzugten Ausgestaltung der Erfindung wird der kondensierte Zusatzdampf zusammen mit dem in dem Wärmeaustauscher kondensierten heißen Gemisch aus Wasser und Desorbat gesammelt. Die vereinigten Kondensate können als Heizmedium oder zur Erzeugung von Wasserdampf, insbesondere zum Aufheizen von zu regenerierender Aktivkohle verwendet werden. Durch diese Maßnahme kann eine noch weiter verbesserte Ausnutzung der in dem aus dem Adsorber austretenden Wasserdampf gespeicherten Energie erreicht werden.

Wenn der kondensierte Zusatzdampf und ggf. das aus dem Wärmeaustauscher stammende Kondensat zur Wasserdampferzeugung verwendet werden soll, wird bevorzugterweise der Mischkondensator, in dem der Zusatzdampf kondensiert wurde, als Ent spannungsverdampfer verwendet. In dem gleichen Mischkondensator wird somit in einem ersten Betriebszustand Zusatzdampf kondensiert und in einem zweiten Betriebszustand Wasserdampf erzeugt. Ein zusätzlicher Verdampfer ist also nicht erforderlich, wenn nach dem Verfahren der Erfindung Wasserdampf erzeugt werden soll.

Als Kühlmedium für den ersten Betriebszustand des Mischkondensators dient vorzugsweise die nach dem zweiten Betriebszustand im Mischkondensator abgekühlte Flüssigkeit.

Weitere Ausgestaltung der Erfindung sind Gegenstand der Unteransprüche.

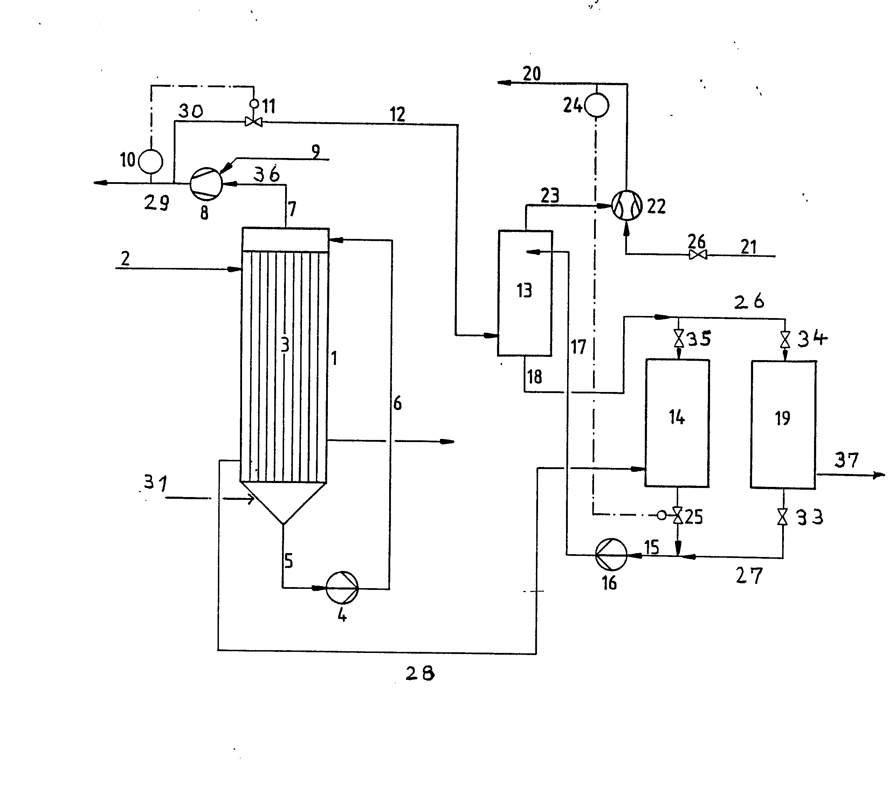

Die Erfindung ist im folgenden anhand eines Ausführungsbeispiels in Verbindung mit der Zeichnung näher erläutert. Dabei zeigt die einzige Figur 1 im Blockschaltbild eine Anlage zur Durchführung des Verfahrens.

In einen Fallstromverdampfer 3 wird mit $CS_2$ beladener Wasserdampf, der aus einem bereits auf seine Endtemperatur von etwa 95 °C aufgeheizten Adsorber stammt, geleitet. Als Kühlmedium des Fallstromverdampfers dient reines Wasser, das über eine Rohrleitung 31 dem Fallstromverdampfer zugeführt wird. Das Kühlmedium im Fallstromverdampfer mit einer Temperatur von etwa 90 °C wird mittels einer Flüssigkeitspumpe 4 und den Rohrleitungen 5,6 im Kreislauf geführt.

Der Teil des in den Fallstromverdampfer 3 eingeführten Wasserdampfes, der nicht kondensiert wird und relativ reich an $CS_2$-Dampf ist, wird über eine Leitung 6 abgezogen und anschließend kondensiert (hier nicht dargestellt). Das primärseitig erzeugte Kondensat, das noch einen gewissen Anteil an $CS_2$ enthält, wird über Rohrleitung 28 aus dem Fallstromverdampfer 3 abgezogen.

Der sekundärseitig erzeugte Wasserdampf, der eine Temperatur von etwa 90 °C aufweist, wird von einem Kompressor 8, der mit dem Fallstromverdampfer 3 über eine Rohrleitung 36 verbunden ist, angesaugt und verdichtet. Der verdichtete Wasserdampf wird durch Rohrleitung 29 dem Adsorber zum weiteren Ausdämpfen der Aktivkohle zugeleitet.

Dem Kompressor 8, vorzugsweise ein Turbokompressor oder ein Gebläse, wird über die Rohrleitung 9 eine bestimmte Wassermenge zugeführt, die so bemessen ist, daß der verdichtete Dampf die Betriebstemperatur erreicht, bei der der zu regenerierende Adsorber ausgedämpft wird, hier also etwa 95 °C. Der Dampf wird in dem hier dargestellten Ausführungsbeispiel von etwa 105 auf 95 °C abgekühlt.

Bei der Kompression des Sekundärdampfes unter Wassereinspritzung wird mehr Dampf erzeugt, als zum Ausgleich der Differenz zwischen dem im Fallstromverdampfer 3 primärseitig kondensiertem Dampf und sekundärseitig erzeugten Dampf erforderlich ist. Der im Überschuß erzeugte Dampf, der hier als Zusatzdampf bezeichnet wird, wird durch eine kompressionsseitige Rohrleitung 30 und eine weitere Rohrleitung 12 einem Mischkondensator 13 zugeführt. Der Dampfstrom vom Kompressor 8 zum Mischkondensator 13 wird dabei von einem Ventil 11 zwischen den Rohrleitungen 30 und 12 gesteuert das Ventil wird dabei durch einen in der Rohrleitung 29 angeordneten druckbeaufschlagten Regler 10 in der Weise gesteuert, daß der überschüssige Zusatzdampf in den Mischkondensator 13 geleitet wird.

Als Kühlmedium für den Mischkondensator 13 wird Wasser von 70 bis 80 °C verwendet. Dieses Wasser kann dem Speicherbehälter 19 nach Öffnung des Ventils 33 und Einschaltung der Pumpe 16 entnommen werden; das Kühlmedium wird durch die Rohrleitung 27, 15, 17 dem Mischkondensator 13 zugeführt. Das nach Kondensation des Zusatzdampfes im Mischkondensator erzeugte Kondensat, das etwa eine Temperatur von 95 °C aufweist, wird über Rohrleitung 18 bei geöffnetem Ventil 35 dem Wasserbehälter 14 zugeführt und dort gesammelt. In dem gleichen Wasserbehälter wird auch das im Fallstromverdampfer 3 primärseitig erzeugte Kondensat nach Transport durch Rohrleitung 28 gespeichert. In dem in dem Behälter 14 gespeicherten Heißwasser ist also ein beträchtlicher Teil der bei Kompression des Sekundärdampfes aus dem Fallstromverdampfer 3 aufzuwendenden Kompressionsarbeit sowie die in dem warmen Kondensat des Fallstromverdampfers 3 gespeicherte Wärmeenergie enthalten. Diese Wärmeenergie kann nach Beendigung des Ausdämpfens des Adsorbers mit der Aktivkohle wieder genutzt werden. Prinzipiell kann das im Speicher behälter 14 gespeicherte heiße Wasser für beliebige Prozesse, die mit Heißwasser arbeiten, genutzt werden. In dem dargestellten Ausführungsbeispiel wird das Heißwasser des Wasserbehälters 14 zur Erzeugung von heißem Wasserdampf genutzt, der einem zweiten zu regenerierenden Adsorber mit Aktivkohle zum Zwecke der Erwärmung der Aktivkohle auf die erforderliche Endtemperatur zugeführt werden soll.

Wenn die Regenerierung des auszudämpfenden, ersten Adsorbers abgeschlossen ist, wird das Ventil 35 geschlossen und der Mischkondensator 13 aus seinem ersten Betriebszustand, in welchem er als Kondensator arbeitet, in einen zweiten Betriebszustand zur Erzeugung von Dampf versetzt.

Der Dampfstrahlapparat 22 saugt über Rohrleitung 23 aus dem in seinem zweiten Betriebszustand als Verdampfer arbeitenden Mischkondensator 13 warmen Wasserdampf an. Das hierfür erforderliche Wasser stammt aus dem Wasserbehälter 14 und wird über Rohrleitung 25,15,17 mithilfe der Pumpe 16 an den nun als Verdampfer arbeitenden Mischkondensator 13 geleitet.

Der Dampfstrahlapparat 22 wird noch durch eine zweite, hier nicht dargestellte Dampfquelle, über Rohrleitung 21 mit Ventil 26 gespeist. Der verdichtete heiße Wasserdampf wird über Rohrleitung 20 einem Adsorber mit zu regenerierender Aktivkohle zur Erhitzung der Aktivkohle auf die erforderliche Endtemperatur geleitet. Der Druck in der Rohrleitung 20 wird durch einen Druckregler 24 in der Rohrleitung 20 konstant gehalten, wobei der Druckregler 24 ein Ventil 25 in der Rohrleitung zwischen dem Wasserbehälter 14 und dem Mischkondensator 13,15,17 in der Weise öffnet oder schließt, daß der Mischkondensator 13 in der erforderlichen Weise mit heißem Wasser versorgt wird.

Das Ventil 26 und die Pumpe 16 sind bevorzugterweise in der Weise gekoppelt, daß bei Öffnung des Ventils 26 zur Versorgung des Dampfstrahlapparates 22 mit Wasserdampf die Pumpe 16 automatisch eingeschaltet wird.

Die in dem Mischkondensator 13 in seinem zweiten Betriebszustand zurückbleibende Flüssigkeit, die jetzt eine Temperatur von etwa 70 bis 80 °C aufweist, wird bei geschlossenem Ventil 33 und offenem Ventil 34 durch Rohrleitung 18 in den Speicherbehälter 19 geleitet. Das Wasser des Speicherbehälters 19 kann als Kühlmedium für den Mischkondensator 13 weiter verwendet werden.

Das im Speicherbehälter 19 gesammelte Kondensandt enthält praktisch kein $CS_2$ mehr, da das $CS_2$ bereits mit Wasserdampf über Rohrleitung 23 abgezogen und in den aufzuheizenden Adsorber eingeführt wurde. Das aus dem Speicherbehälter 19 zur Aufrechterhaltung eines konstanten Wasservolumens in der Anlage über Leitung 37 abgeführte Wasser enthält somit praktisch kein $CS_2$ mehr.

Wenn die Energie des desorbatbeladenen Wasserdampfes aus einem ersten Adsorber in der beschriebenen Weise zum Aufheizen eines Adsorbers mit Aktivkohle verwendet wird, kann dadurch etwa 15 bis 20 % der in der Aufheizphase des zweiten Adsorbers aufzuwendenden Dampfmenge eingespart werden.

## Ansprüche

1. Verfahren zur Regenerierung von Aktivkohle mit Wasserdampf, bei dem der nach Erwärmung der Aktivkohle abgegeführte desorbatbeladene Wasserdampf mittels eines Wärmeaustauschers zur Erzeugung von reinem Wasserdampf genutzt wird und der sekundärseitig erzeugte reine Wasserdampf komprimiert und auf die Aktivkohle zurückgeleitet wird,
dadurch **gekennzeichnet,**
daß der sekundärseitig erzeugte reine Wasserdampf unter Zuführung von Wasser adiabatisch komprimiert und der dabei erzeugte Zusatzdampf in einen Mischkondensator (13) geleitet und dort in einem ersten Betriebszustand des Mischkondensators (13) zu einem heißen Kondensat kondensiert wird.

2. Verfahren nach Anspruch 1,
dadurch **gekennzeichnet,**
daß das in dem Wärmeaustauscher 3 kondensierte Gemisch aus Wasser und Desorbat sowie das Kondensat des Mischkondensators 13 zusammen gesammelt werden.

3. Verfahren nach einem der Ansprüche 1 oder 2,
dadurch**gekennzeichnet,**
daß der Mischkondensator 13 in einen zweiten Betriebszustand versetzt wird, bei dem durch Entspannung Wasserdampf aus dem Kondensat des Mischkondensators 13 und gegebenenfalls dem Kondensat des Wärmeaustauschers 3 gewonnen und zum Erwärmen von Aktivkohle auf diese geleitet wird.

4. Verfahren nach Anspruch 3,
dadurch **gekennzeichnet,**
daß die im Mischkondensator 13 nach dessen zweitem Betriebszustand zurückbleibende abgekühlte Flüssigkeit gespeichert und als Kühlmedium für den Mischkondensator 13 in seinem ersten Betriebszustand verwendet wird.

5. Anlage zur Durchführung des Verfahrens nach einem der Ansprüche 1 bis 4 mit einem Wärmeaustauscher, in dem primärseitig desorbatbeladener Wasserdampf kondensiert und sekundärseitig reiner Wasserdampf erzeugt wird und einem mit diesem ·verbundenen Kompressor zur Verdichtung des sekundärseitigen Wasserdampfes,
dadurch **gekennzeichnet,**
daß der Kompressor 8 ansaugseitig mit Wasser beaufschlagbar ist und kompressionsseitig mit einer Rohrleitung 29 zu einem die Aktivkohle enthaltenden Absorber versehen ist, wobei die kompressionsseitige Rohrleitung (30) ein Ventil (11) aufweist, das den Durchfluß des kompressionsseitig erzeugten Zusatzdampfes durch eine weitere, zu einem Mischkondensator (13) führende Rohrleitung (12) steuert.

6. Anlage nach Anspruch 5,
dadurch **gekennzeichnet,**
daß ein Wasserbehälter (14) zur Aufnahme des Kondensates aus dem Mischkondensator (13) und Wärmeaustauscher (3) sowie Rohrleitungen (28, 18) zum Transport der Kondensate zum Wasserbehälter (14) vorgesehen sind,
der Wasserbehälter (14) mit einer Rohrleitung (15) sowie einer Pumpe (16) zur Rückführung des Kondensates in den Mischkondensator (13) versehen ist,
der Mischkondensator (13) durch eine Rohrleitung (23) zur Abführung von Wasserdampf aus dem Mischkondensator (13) an einen Dampfstrahlapparat (22) angeschlossen ist, und der Mischkondensator (13) über einen Zulauf (15, 27) und Ablauf (18, 26) mit einem Speicherbehälter (19) für die im zweiten Betriebszustand des Mischkondensators (13) anfallende Flüssigkeit verbunden ist.

7. Anlage nach einem der Ansprüche 5 oder 6.
**gekennzeichnet** durch
einen Druckregler (24), der den Druck des von der Dampfstrahlapparatur (22) im zweiten Betriebszustand des Mischkondensators (13) verdichteten Dampfes und gegebenenfalls einer weiteren Dampfquelle durch Steuerung eines Ventils 25 in der Rohrleitung (15) zur Rückführung des Wassers aus dem Wasserbehälter (14) in den Mischkondensator (13) konstant hält.

8. Anlage nach einem der Ansprüche 5 bis 7,
dadurch **gekennzeichnet,**
daß das Ventil 11 zur Regulierung des Dampfstroms zwischen Kompressor 8 und Mischkondensator 13 durch einen Regler mit Drucksonde 10 gesteuert wird, die den Druck des durch den Kompressor 8 verdichteten Dampfes mißt.

9. Anlage nach einem der Ansprüche 5 bis 8,
dadurch **gekennzeichnet,**
daß der Wärmeaustauscher 3 ein Fallstromverdampfer mit eigenem, aus Rohrleitungen 5, 6 und Pumpe 4 gebildeten Kühlkreislauf ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 631 225  (LABORATORIUM FÜR ADSORPTIONS-TECHNIK GmbH) <br> * Anspruch 1 * <br><br> ----- | 1 | C 01 B   31/08 |
| | | | **RECHERCHIERTE SACHGEBIETE (Int. Cl. ³)** |
| | | | C 01 B   31/00 |

Der vorliegende Recherchenbericht wurde für alle Patentansprüche erstellt.

| Recherchenort | Abschlußdatum der Recherche | Prüfer |
|---|---|---|
| DEN HAAG | 27-01-1987 | BREBION J.CH. |